Europäisches Patentamt

European Patent Office

Office européen des brevets

(19)

(11) Veröffentlichungsnummer: **0 451 739 A2**

## (12) EUROPÄISCHE PATENTANMELDUNG

(21) Anmeldenummer: 91105466.6

(22) Anmeldetag: 06.04.91

(51) Int. Cl.5: **F16L 37/00**

(30) Priorität: 11.04.90 DE 4011756
13.11.90 DE 4036016
09.02.91 DE 4104009

(43) Veröffentlichungstag der Anmeldung:
**16.10.91 Patentblatt 91/42**

(84) Benannte Vertragsstaaten:
**AT BE CH DE DK ES FR GB GR IT LI LU NL SE**

(71) Anmelder: **KNAPP MIKROHYDRAULIK KG
Berliner Strasse 1 b
W-8402 Neutraubling(DE)**

(72) Erfinder: **Knapp, Jürgen M
Heinrich-Heine-Str. 10
W-8417 Lappersdorf(DE)**

(74) Vertreter: **Graf, Helmut, Dipl.-Ing. et al
Patentanwälte Dipl.-Ing. A. Wasmeier
Dipl.-Ing. H. Graf Greflinger Strasse 7
Postfach 382
W-8400 Regensburg(DE)**

### (54) Kupplungsstück.

(57) Ein Kupplungsstück, welches zur Herstellung einer Hydraulikverbindung zwischen einer ersten und einer zweiten Hydraulik-Komponente an der ersten Komponente befestigbar und in einer an der zweiten Komponente gebildeten Aufnahme lösbar verankerbar ist, ist wenigstens zweiteilig mit einem äußeren Element und mit einem inneren Element ausgebildet. Das äußere Element ist hülsenartig mit einer durchgehenden Öffnung ausgeführt und besitzt an seiner Außenfläche Mittel für die wiederlösbare Verbindung. Das innere Element ist zumindest in einem Teilbereich hülsenartig ausgebildet und mit diesem hülsenartigen Teilbereich in das äußere Element einsteckbar und dort durch inter einer Rastfläche einrastende federnde Rast- oder Spreizelemente verriegelbar.

FIG.2

EP 0 451 739 A2

Die Erfindung bezieht sich auf ein Kupplungsstück, welches zur Herstellung einer Fluid-Verbindung, insbesondere Hydraulik-Verbindung zwischen einer ersten Fluidtechnik-Komponente und einer zweiten Fluidtechnik-Komponente an der ersten Komponente befestigbar und in einer Aufnahme der zweiten Fluidtechnik-Komponente wieder lösbar verankerbar ist.

Kupplungsstücke dieser Art sind insbesondere für Hydraulik-Verbindungen zur Verwendung bei Hydrauliksystemen in den unterschiedlichsten Ausführungen bekannt. Die wieder lösbare Verankerung ist in der Regel durch eine Schraubverbindung realisiert, die von einem Außengewinde des Kupplungsstückes und einem passenden Innengewinde der betreffenden Aufnahme gebildet ist, so daß die bekannten Kupplungsstücke bzw. die mit ihnen hergestellte Verbindung auch als Schraubkupplung bezeichnet werden kann. Die ersten Fluidtechnik-Komponenten sind dabei z. B. hydraulische Verbindungs- oder Anschlußleitungen in Form von Schläuchen oder Rohren. Die zweiten Fluidtechnik-Komponenten sind Hydraulik-Bauteile, wie beispielsweise Hydraulik-Zylinder, Verkettungsblöcke, Ventile oder dgl. Elemente. Eine Schraubkupplung hat grundsätzlich den Vorteil einer hohen Zuverlässigkeit und Betriebssicherheit, verbunden auch mit dem Vorteil, daß diese Verbindung im Bedarfsfall, beispielsweise zu Reparaturzwecken, mit einem geeigneten Werkzeug wieder gelöst werden kann. Der Nachteil einer Schraubkupplung bzw. Schraubverbindung besteht im wesentlichen in dem relativ hohen Montageaufwand beim Herstellen der Verbindung, der in vielen Bereichen, so beispielsweise auch im Automobilbau den Erfordernissen einer rationellen Fertigung nicht entspricht.

Bei Hydraulikanwendungen, bei denen in der Regel sehr hohe Hydraulik-Drücke, beispielsweise in der Größenordnung bis zu 250 bar und mehr, zur Anwendung kommt, ist zu fordern, daß das Kupplungsstück nicht nur eine sichere und einwandfreie Verbindung herstellt, sondern auch so ausgebildet ist, daß diese Verbindung zwangsläufig gewährleistet ist, also Fehler beim Verbinden ausgeschlossen sind.

Aufgabe der Erfindung ist es, ein Kupplungsstück aufzuzeigen, welches unter Beibehaltung der Vorteile eines Kupplungsstückes mit wieder lösbarer Verankerung und eines geringen Montageaufwandes beim Verbinden zweier Fluidtechnik-Komponenten eine einwandfreie und zuverlässige Verbindung sicherstellt.

Zur Lösung dieser Aufgabe ist ein Kupplungsstück entsprechend dem kennzeichnenden Teil des Patentanspruches 1 bzw. des Patentanspruches 4 ausgebildet.

Die Erfindung schafft die Möglichkeit, das äußere, hülsenartige Element bereits bei der Herstellung der jeweiligen zweiten Fluidtechnik-Komponente in der dortigen Aufnahme vorzumontieren. Dies ist in der Regel ohne größeren Aufwand deswegen möglich, weil beim Hersteller der Fluidtechnik-Komponenten ohnehin die für eine rationelle Fertigung und Montage notwendigen Hilfsmittel vorhanden sind. Beim Anwender, d.h. beispielsweise beim Hersteller von Maschinen oder Automobilen, der die Fluidtechnik-Komponenten mit den vormontierten Elementen des jeweiligen Kupplungsstückes bezieht, kann die Verbindung zwischen einer ersten und einer zweiten Fluidtechnik-Komponente durch einfaches Einführen bzw. Einschieben des inneren Elementes in das äußere Element, d.h. durch eine Steckmontage erfolgen, die sehr einfach insbesondere auch an solchen Bereichen beispielsweise an einem Automobil durchgeführt werden kann, die für ein Werkzeug nur schwer zugänglich sind.

Die wieder lösbare Verankerung ist bei der Erfindung durch eine Drehverbindung realisiert. Unter "Drehverbindung" ist dabei bevorzugt eine Schraubverbindung zwischen dem Kupplungsstück und der zweiten Fluidtechnik-Komponente zu verstehen. Es sind hier aber auch andere Verbindungen denkbar, die durch Drehen bzw. Eindrehen bewirkt werden, so beispielsweise bajonettartige Verbindungen oder Verbindungen unter Verwendung einer an dem Kupplungsstück vorgesehenen Überwurfmutter usw.

Im Bedarfsfall, d.h. beispielsweise für Reparaturzwecke, kann die mit dem erfindungsgemäßen Kupplungsstück hergestellte Verbindung jederzeit mit einem geeigneten Werkzeug wieder gelöst werden. Die Erfindung verbindet somit die Vorteile einer solchen Schraubkupplung mit dem Vorteil einer einfachen Steckmontage.

Bei einer Ausführungsform der Erfindung sind zur Verbindung des äußeren und inneren Elementes des Kupplungsstückes Rastelemente in Form von Spreiz- oder Rastflügel vorgesehen. Am inneren Element ist dann eine als Kegelfläche ausgebildete Anlagefläche vorgesehen, die eine Abstützung für die Spreizflügel bildet. Dies stellt einen ganz entscheidenden Faktor für die Zuverlässigkeit und Anwendbarkeit des Kupplungsstückes im Hydraulik-Bereich dar. Die konische Abstützfläche unterstützt nicht nur das für eine zuverlässige Verriegelung des inneren Elementes im äußeren Element notwendige Abspreizen der Spreizflügel. Die Abstützfläche bewirkt vielmehr zwangsläufig auch, daß sämtliche Spreizflügel nach dem Montieren der Spreizhülse in der für eine zuverlässige Verriegelung erforderlichen Weise radial nach außen gespreizt sind und über die Umfangsfläche des inneren Elementes wegstehen. Dies gilt selbst dann, wenn die Spreizflügel bei der Herstellung der Spreizhülse nicht nach außen gespreizt wurden, sondern dieses Spreizen erst bei der Montage der Spreizhülse auf dem inneren Element des Kupplungsstückes durch die Kegelfläche erfolgt. Neben einer Unterstützung und Verstärkung der Federwirkung der Spreizflügel bewirkt die Kegelfläche also auch, daß die Spreizflügel zwangsläufig in der erforderlichen Weise orientiert sind. Montagefehler sind somit weitestgehend ausgeschlossen. Außerdem ergibt sich die Möglichkeit einer besonders einfachen Herstellung der Spreizhülse.

Bei einer anderen Ausführungsform der Erfindung ist das Rastelement von einem geschlitzten Ring aus einem federnden bzw. elastischen Material, vorzugsweise aus Federstahl gebildet.

Zur Abdichtung des Übergangs zwischen dem inneren Element bzw. einem dort ausgebildeten Kanal und einer in der zweiten Hydraulik-Komponente ausgebildeten Hydraulikführung ist am inneren Element bevorzugt ein Dichtungsring vorgesehen, der gegen eine kreiszylinderförmige, den Dichtungsring umschließende Gegenfläche der Flüssigkeitsführung anliegt. Diese Ausbildung hat den Vorteil, daß auch nach Herstellung der Verbindung ein Drehen bzw. Schwenken des inneren Elementes um eine Achse möglich ist, die von der Gegenfläche konzentrisch umschlossen wird, ohne daß eine Beschädigung der Dichtung eintritt. Hierdurch ist ein bequemes Ausrichten der Schläuche nach der Montage möglich.

Bei einer weiteren Ausführungsform ist die Rastfläche von wenigstens einem entfernbaren Verriegelungselement gebildet. Bei dieser Ausführung ist dann ein Lösen der beiden Elemente des Kupplungsstückes durch einfaches Entfernen des Verriegelungselementes möglich. Ansonsten wird zum Lösen der beiden Elemente des Kupplungsstückes voneinander bevorzugt ein Werkzeug in Form einer Entriegelungshülse verwendet.

Die Erfindung bezieht sich weiterhin auch auf ein Demontagewerkzeug zur Verwendung bei dem Kupplungsstück, d. h. zum Trennen der beiden Elemente des Kupplungsstückes voneinander.

Weiterbildungen der Erfindung sind Gegenstand der Unteransprüche.

Die Erfindung wird im folgenden anhand der Figuren an Ausführungsbeispielen näher erläutert. Es zeigen:

Fig. 1
in vereinfachter Darstellung und im Schnitt ein zweiteiliges, schraubbares Kupplungsstück gemäß der Erfindung;

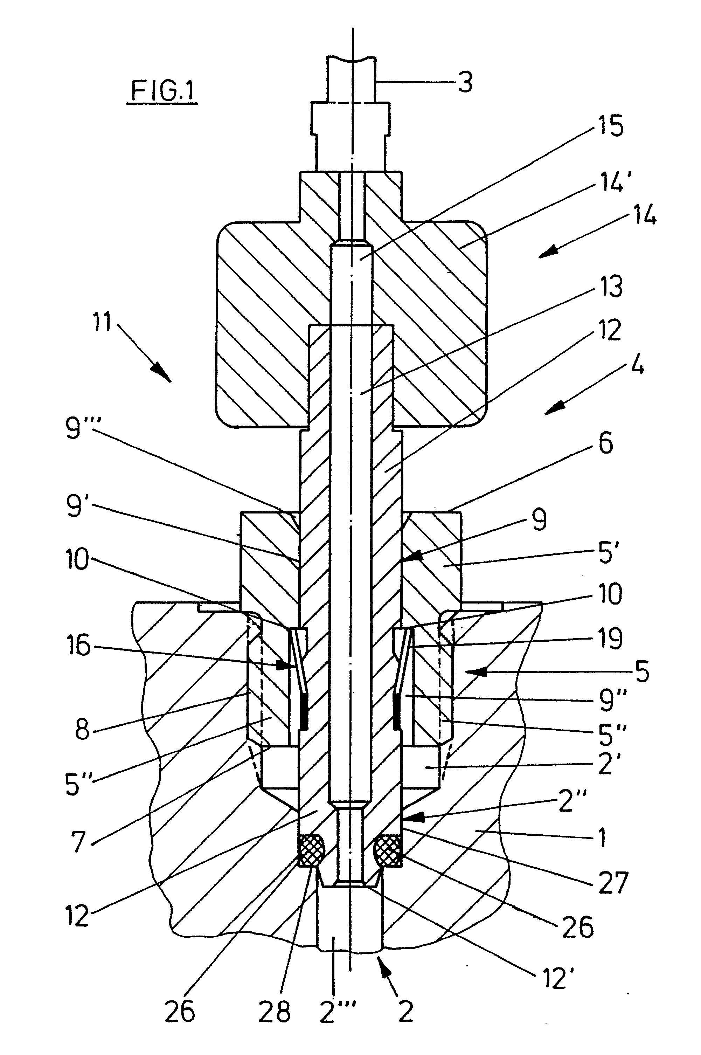

Fig. 2
in vergrößerter Teildarstellung sowie teilweise im Schnitt das äußere und innere Element sowie die das innere Element im äußeren Element haltende Spreizhülse des zweiteiligen Kupplungsstückes nach Fig. 1;

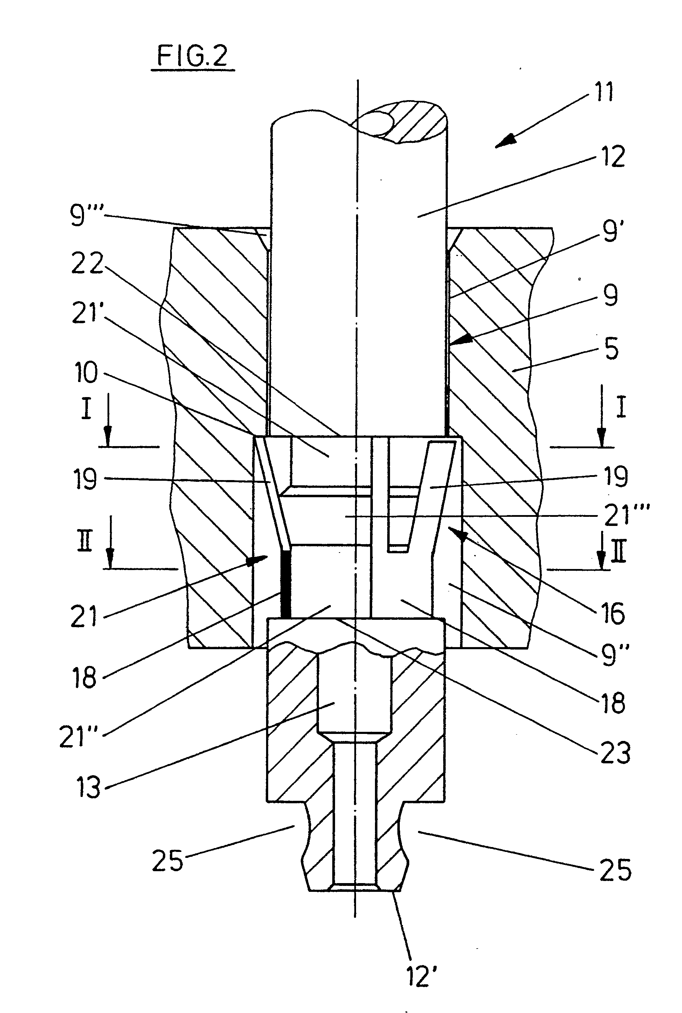

Fig. 3
einen Schnitt entsprechend der Linie I-I der Fig. 2;

Fig. 4
in vereinfachter Darstellung sowie im Schnitt eine zweite, mögliche Ausführung des erfindungsgemäßen Kupplungsstücks;

Fig. 5 und 6
in Seitenansicht und im Schnitt sowie in Blickrichtung des Pfeiles A eine dritte, mögliche Ausführungsform des erfindungsgemäßen Kupplungsstückes;

Fig. 7
in ähnlicher Darstellung wie Fig. 1 eine weitere, verbesserte Ausführungsform der Erfindung;

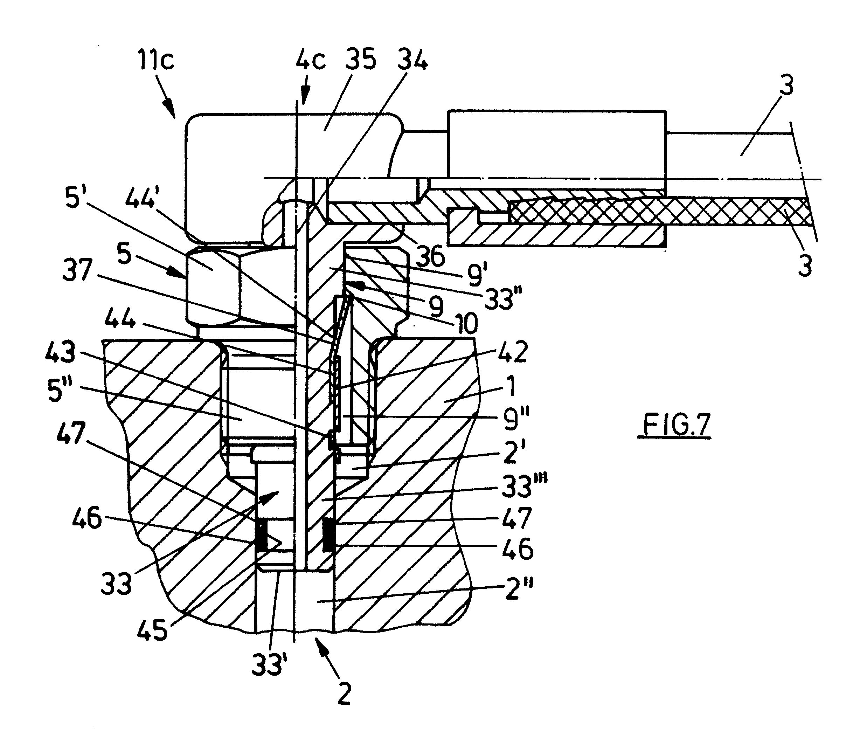

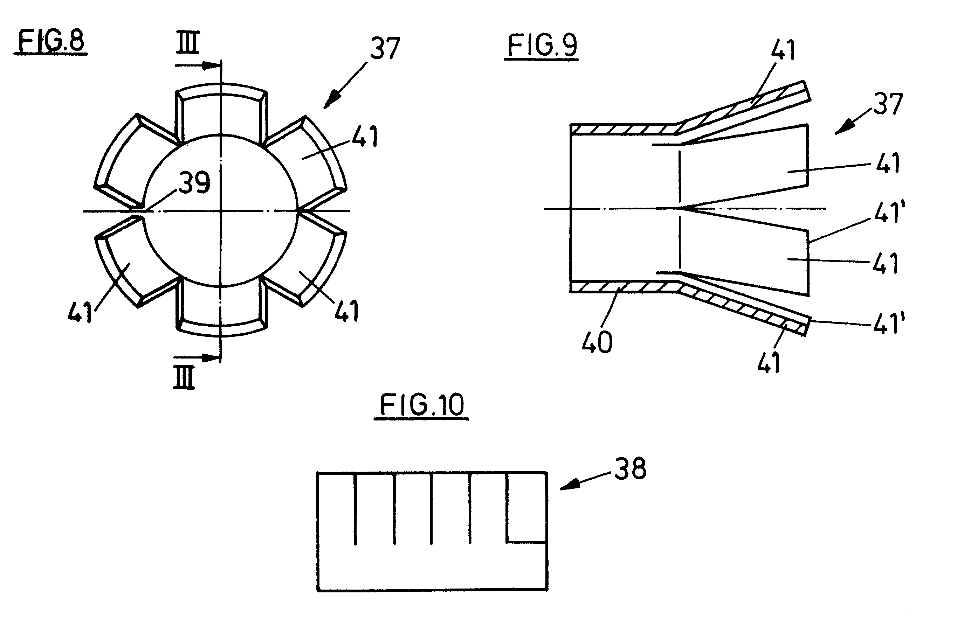

Fig. 8 und 9
in vergrößerter Detaildarstellung die Spreizhülse zur Verwendung bei dem zweiteiligen Kupplungsstück gemäß Fig. 7 in einer Stirnansicht sowie im Schnitt entsprechend der Linie III-III der Fig. 8;

Fig. 10
einen Zuschnitt aus Feder-Blech zur Herstellung der Spreizhülse nach Figuren 8 und 9;

Fig. 11 und 12
in ähnlicher Darstellung wie Fig. 7 bzw. im Schnitt entsprechend der Linie IV-IV eine weitere Ausführungsform des erfindungsgemäßen Kupplungsstückes;

Fig. 13
eine Entriegelungshülse zusammen mit einer Teildarstellung des zweiteiligen Kupplungsstückes der Fig. 7.

Fig. 14
eine ähnliche Darstellung wie Fig. 2, bei einer weiteren, möglichen Ausführungsform der Erfindung.

In den Figuren ist 1 ein Fluidtechnik-Bauelement, d.h. beispielsweise ein hydraulisches Bauelement bzw. der Körper eines solchen Bauelementes, welches die unterschiedlichste Formgebung und/oder Funktion aufweisen kann, beispielsweise ein Zylinder, ein Verkettungsblock, ein Ventil, eine Hydraulikpumpe oder dgl. Fluidtechnik- bzw. Hydraulik-Komponente sein kann. An das Hydraulik-Bauelement 1 bzw. an eine in diesem Bauelement ausgebildete Flüssigkeitsführung 2, die z.B. ein Kanal, eine Kammer oder dgl. Flüssigkeitsführung für die unter Druck stehende hydraulische Flüssigkeit ist, ist das eine Ende einer Leitung, die bei der Ausführungsform nach Fig. 1 ein Schlauch 3 ist, angeschlossen, und zwar unter Verwendung eines Kupplungsstückes 4, an dem das eine Ende des Schlauches 3 in geeigneter Weise, beispielsweise unter Verwendung einer Quetsch-Hülse unlösbar befestigt ist.

Das Kupplungsstück 4 ist zweiteilig ausgebildet und besteht zunächst aus einem äußeren, hülsenartigen Element 5, welches an einem ersten, in der Fig. 1 oberen Abschnitt 5' an seiner die Hülsenachse umschließenden Umfangsfläche eine Werkzeugangriffsfläche bildet, d.h. bei der dargestellten Ausführungsform als Sechskant für übliche Maulschlüssel ausgebildet ist. Dieser Abschnitt 5' weist auch die in der Fig. 1 obere Stirnseite 6 des hülsenartigen Elementes auf. An den Abschnitt 5' anschließend besitzt das hülsenartige Element den Abschnitt 5", der die in der Fig. 1 untere Stirnseite 7 des hülsenartigen aus Metall gefertigten Elementes 5 bildet und am Umfang mit einem Außengewinde 8 versehen ist, dessen Außendurchmesser kleiner ist als der kleinste Durchmesser des Abschnittes 5'.

Das hülsenartige Element 5, welches mit seinem Außengewinde 8 von der Außenseite des Hydraulik-Bauelementes 1 her in ein Innengewinde des im Querschnitt vergrößerten Abschnittes 2' der Flüssigkeitsführung 2 eingeschraubt ist, besitzt eine durchgehende, d.h. von der Stirnseite 6 bis an die Stirnseite 7 reichende Bohrung 9, die über ihre gesamte Länge einen kreisförmigen Querschnitt aufweist und achsgleich mit der Achse des hülsenartigen Elementes 5 liegt. Ausgehend von der Stirnseite 6 besitzt die Bohrung 9 zunächst einen Abschnitt 9' und daran anschließend einen bis an die Stirnseite 7 reichenden Abschnitt 9", der einen im Vergleich zum Abschnitt 9' größeren Querschnitt aufweist. Am Übergang zwischen den Abschnitten 9' und 9" ist eine ringförmige, die Achse des hülsenartigen Elementes 5 umschließende und im wesentlichen in einer Ebene senkrecht zu dieser Achse liegende Anlagefläche 10 gebildet. Bei der dargestellten Ausführungsform ist die axiale Länge der beiden Abschnitte 9' und 9" etwa gleich. Dies ist jedoch nicht unbedingt erforderlich. Da der Abschnitt 9' aber in der nachstehend noch näher beschriebenen Weise zu axialen Führung und radialen Fixierung des als Stecknippel ausgebildeten und ebenfalls aus Metall gefertigen inneren Elementes 11 des Kupplungsstückes 4 dient, ist es erforderlich, daß der Abschnitt 9' eine für diese Funktion ausreichende Länge aufweist. Im Bereich der Stirnseite 6 bzw. an der dortigen Öffnung ist die Bohrung 9 bei 9''' angeschrägt, und zwar derart, daß sie sich im Bereich der dortigen Öffnung kegelförmig erweitert.

Das Element 11 besteht im wesentlichen aus einem als Rohrstück oder Hülse ausgebildeten Teil 12, welches eine kreiszylinderförmige Umfangsfläche aufweist und mit einem Kanal 13 versehen ist, der achsgleich mit der Achse des Teiles 12 liegt und am oberen Ende sowie am unteren Ende 12' des Teiles 12 offen ist. Am oberen Ende des Teiles 12 ist ein auch als Schlauchtülle ausgebildeter Kopf 14 durch Hartlöten oder auf andere, geeignete Weise befestigt, und zwar derart, daß der Kanal 13 sich in einem im Kopf 14 vorgesehenen Kanal 15 nach außen hin abgedichtet fortsetzt. An dem in der Fig. 1 oberen Ende des Kopfes 14, der mit einem Teilbereich 14' als Handstück mit einem im Vergleich zum Teil 12 vergrößerten Außendurchmesser ausgebildet ist, ist das eingangs erwähnte eine Ende des Schlauches 3 befestigt.

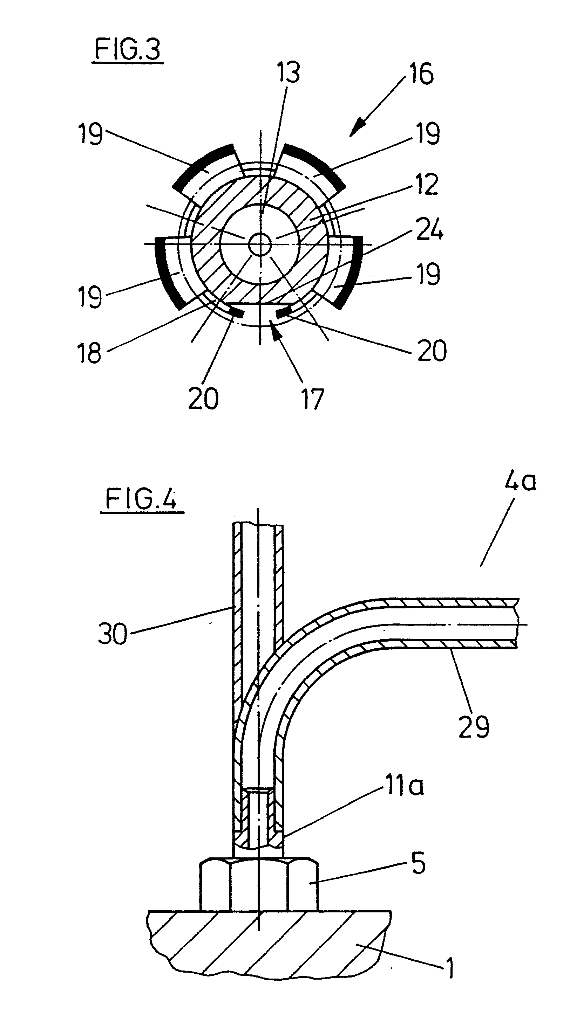

Zwischen dem oberen und unteren Ende des Teiles 12 sind an diesem, über den Umfang wegstehende, radial nach innen bewegbare federnde Rastelemente vorgesehen, mit denen das als Stecknippel ausgebildete innere Element 11 durch Einrasten in dem äußeren Element 5 gehalten ist. Bei der dargestellten Ausführungsform sind diese Rastelemente von einer einzigen Spreizhülse 16 gebildet, die aus einem Federstahl mit allen ihren Elementen einstückig durch Rollen und Stanzen hergestellt ist. Wie die Fig. 2 und 3 besonders deutlich zeigen, ist die Spreizhülse 16 bei 17 geteilt und besitzt u.a. einen hülsenartigen bzw. hohlzylinderartigen Abschnitt, der allerdings infolge der Teilung 17 ebenfalls nicht vollständig geschlossen ist. An einer gemeinsamen Seite des Abschnittes 18, d.h. bei der für die Fig. 1 und 2 gewählten Darstellung an der oberen Seite des Abschnittes 18 besitzt die Spreizhülse 16 vier über diese Seite wegstehende Spreizflügel 19, die an ihrer bezogen auf die Achse der Spreizhülse 16 innen liegenden Seite konkav und an ihrer außen liegenden Seite konvex, jeweils in etwa kreisbogenförmig gekrümmt und derart radial nach außen gebogen sind, daß der radiale Abstand der Spreizflügel 19 von der Achse der Spreizhülse 16 mit zunehmendem Abstand vom Abschnitt 18 zunimmt und die Spreizflügel einen Winkel mit der Achse der Spreizhülse einschließen. Die Spreizflügel 19 weisen in Umfangsrichtung der Spreizhülse 16 jeweils die gleiche Breite auf. Beidseitig von der Teilungsstelle 17 ist die Spreizhülse 16 mit jeweils einem Flügel 20 versehen. Die beiden Flügel 20 stehen über die gleiche Seite des Abschnittes 18 wie die Spreizflügel 19 weg, besitzen die gleiche Länge wie die Spreizflügel 19 und bilden an ihrer innen liegenden und außen liegenden Seite jeweils Zylinderflächen, die einen gleichbleibenden Abstand von der Achse der Spreizhülse 16 aufweisen und in die entsprechenden Innen- und Außenflächen des Abschnittes 18 übergehen. Diese nicht gespreizten Flügel 20 dienen in der nachstehend noch näher beschriebenen Weise zur Halterung bzw. Fixierung der Spreizhülse 16 an dem Element 11 bzw. dessen Teil 12.

Zur Halterung und Fixierung der Spreizhülse 16 besitzt das Teil 12 an seiner Außenfläche eine ringförmige Ausnehmung bzw. Eindrehung 21, die axial, d.h. an beiden Seiten jeweils durch eine Schulter bzw. Ringfläche 22 bzw. 23 begrenzt ist, die in einer senkrecht zur Achse des Teiles 12 verlaufenden Ebene liegt. Im Bereich der in den Fig. 1 und 2 oberen Ringfläche 22 sowie im Bereich der in diesen Figuren unteren Ringfläche 23 besitzt die Eindrehung 21 eine Tiefe, die mindestens gleich, bevorzugt jedoch größer ist als die Dicke des für die Herstellung der Spreizhülse 16 verwendeten Flachmaterials. Weiterhin ist die Eindrehung 21 sowohl im Bereich der Ringfläche 22 als auch im Bereich der Ringfläche 23 jeweils im wesentlichen kreiszylinderförmig ausgebildet, und zwar mit einem Durchmesser, der geringfügig größer ist als der Durchmesser des Abschnittes 18 der Spreizhülse 16 im entspannten Zustand. Die axiale Breite der Eindrehung 21 insgesamt, d.h. der Abstand der Ringflächen 22 und 23 ist gleich der axialen Länge, die die Spreizhülse 16 im Bereich der Flügel 20 aufweist und damit gleich dem Abstand zwischen dem in der Fig. 2 unteren Rand des Abschnittes 18 und dem freien Ende der Flügel 20. Die in die Eindrehung 21 eingesetzte Spreizhülse stützt sich somit mit den freien Enden der beiden Flügel 20 an der Ringfläche 22 und mit dem den Spreizflügeln 19 und den Flügeln 20 abgewendeten unteren Seite bzw. Rand gegen die Ringfläche 23 ab und ist damit auch axial nicht verschiebbar in der Eindrehung 21 bzw. am Teil 12 gehalten. Die axiale Breite des Abschnittes 21" entspricht der axialen Breite des Abschnittes 18 der Spreizhülse 16. Zwischen den beiden Abschnitten 21' und 21" weist die Eindrehung 21 noch einen Abschnitt 21"' auf, an welchem sich der Außendurchmesser mit zunehmendem axialen Abstand vom Abschnitt 21" kegelstumpfförmig vergrößert, und zwar entsprechend der Neigung der Spreizflügel 19. Der Abschnitt 21"' bildet eine Anlage- und Stützfläche für die Spreizflügel 19, die allerdings mit einer das freie Ende dieser Spreizflügel 19 aufweisenden Länge, die in etwa gleich der axialen Breite des Abschnittes 21' ist, über die der Ringfläche 22 zugewendeten Seite des Abschnittes 21"' wegstehen und an ihren freien Enden auch radial über die Umfangsfläche des Teiles 12 vorstehen. Der maximale Durchmesser des Abschnittes 21"' ist auf jeden Fall mindestens um die doppelte Stärke des für die Herstellung der Spreizhülse 16 verwendeten Flachmaterials kleiner als der Außendurchmesser, den das Teil 12 außerhalb der Eindrehung 21 aufweist, so daß das als Stecknippel ausgebildete Element 11 in der nachfolgend noch näher beschriebenen Weise durch Einführung und Einrasten im Element 5 verankert werden kann.

Um trotz des Abschnittes 21"' ein beidendiges Anliegen der Spreizhülse 16 im Bereich der Flügel 20 an den Ringflächen 22 und 23 zu Erreichen und außerdem auch ein Verdrehen der Spreizhülse 16 um die Achse des Teiles 12 zu verhindern, ist die Eindrehung 21 dort, wo bei montierter Spreizhülse 16 die Flügel 20 angeordnet sind, mit einer Abflachung 24 versehen, die sich über die gesamte axiale Breite der Eindrehung, d.h. über den gesamten Bereich zwischen den Ringflächen 22 und 23 in sämtlichen Abschnitten 21'-21"' erstreckt.

Im Bereich des Ende 12' ist das Teil 12 mit einer die Achse dieses Teiles konzentrisch umschließenden ringförmigen Nut 25 versehen, die sowohl zum Umfang, als auch zum Ende 12' hin derart offen ist, daß ein in dieser Nut 25 angeordneter Dichtungs- bzw. O-Ring 26 bei am Hydraulikbauteil 1 befestigtem Kupplungsstück 4 nicht nur an seinem radial außen liegenden Umfangsbereich, sondern auch stirnseitig jeweils gegen eine Dichtungsfläche 27 bzw. 28 anliegt, die in der Flüssigkeitsführung 2 des Hydraulik-Bauelementes 1 ausgebildet sind. Da die Nut 25 so ausgeführt ist, daß der O-Ring 26 auch an seinem in der Fig. 1 unteren Bereich teilweise von der Nut 25 aufgenommen ist, ist der O-Ring 26 unverlierbar am Teil 12 gehalten. Durch geeignete Materialauswahl sowie durch einen entsprechend großen Querschnitt ist dafür gesorgt, daß der O-Ring ein besonders großes Rückfedervolumen aufweist.

Die Dichtungsfläche 27, mit der der O-Ring 26 mit seinem radial außen liegenden Bereich zusammenwirkt, ist von der kreiszylinderförmigen Innenfläche eines Abschnittes 2" der Flüssigkeitsführung 2 gebildet, der (Abschnitt) einen im Vergleich zum Abschnitt 2' kleineren Durchmesser aufweist, welcher in etwa gleich oder geringfügig größer ist als der Außendurchmesser des Teiles 12. Die Fläche 27 des Abschnittes 2" dient somit ebenfalls als Abstützfläche für eine radiale Abstützung bzw. Fixierung des Teiles 12 bzw. des Elementes 11. Die Dichtungsfläche 28 ist dadurch gebildet, daß die Flüssigkeitsführung 2 anschließend an den Abschnitt 2" einen Abschnitt 2"' mit einem im Vergleich zum Abschnitt 2" verkleinerten Durchmesser aufweist, so daß am Übergangsbereich zwischen den Abschnitten 2" und 2"' als Schulter die ringförmige Dichtungsfläche 28 gebildet ist. Der Durchmesser des Abschnittes 2"' entspricht dem Durchmesser des Teiles 12 am Ende 12'.

Die Verwendung des vorstehend beschriebenen Kupplungsstückes 4 erfolgt in der Weise, daß beim Herstellen der später miteinander zu verbindenden Komponenten eines hydraulischen Systems, beispielsweise bei der Herstellung der Hydraulik-Bauteile 1 und der Schläuche 3, mit denen diese Hydraulik-Bauteile verbunden werden sollen, die Hydraulik-Bauteile 1 jeweils mit den Elementen 5 und die Leitungen 3 jeweils mit den Elementen 11 vormontiert werden. Dies ist bei der Fertigung der Hydraulik-Bauteile, aber auch bei der Fertigung der Schläuche 3 ohne Probleme rationell möglich. Nach dem Einbau der Hydraulik-Bauelemente 1 beispielsweise in ein Kraftfahrzeug oder in eine Maschine können dann diese Bauelemente 1 in besonders einfacher und montagefreundlicher Weise mit den Hydraulik-Leitungen 3 verbunden werden, und zwar durch Einstecken des jeweiligen Elementes 11 in das zugehörige Element 5. Bei diesem Einstecken werden die Spreizflügel 19 der Spreizhülse 16 des Elementes 11 jeweils federnd radial nach innen gedrückt. Nach dem Passieren der Schulter bzw. Ringfläche 10 spreizen sich die Spreizflügel 19 wieder auseinander und rasten mit ihren freien Enden hinter die Ringfläche 10 ein, so daß das jeweilige Element 11 durch Einrasten unlösbar am Element 5 gehalten und damit der Schlauch 3 mit dem entsprechenden Hydraulik-Bauteil 1 verbunden ist. Mit dem O-Ring 26, der beim Einstecken des Elementes 11 in das jeweilige Element 5 zunächst, d.h. bis zum Einrasten der Spreizflügel 19 hinter die Anlagefläche 10, stärker elastisch komprimiert wird und nach dem Einrasten der Spreizflügel 19 an der Anlagefläche 10 immer noch elastisch verformt dicht gegen die Dichtungsflächen 27 und 28 anliegt, ist nicht nur der Übergang zwischen dem Abschnitt 2''' der Flüssigkeitsführung und dem Kanal 13 nach außen hin abgedichtet, sondern die mit dem Kupplungsstück 4 zum Hydraulik-Bauteil 1 hergestellte Verbindung insgesamt. Dies bedeutet auch, daß durch das Zusammenwirken des O-Ringes 26 mit den Dichtungsflächen 27 und 28 am Hydraulik-Bauteil 1 keine weitere Abdichtung zwischen diesem Hydraulik-Bauteil 1 und dem hülsenartigen Element 5 und/oder zwischen den beiden Elementen 5 und 11 erforderlich ist. Die gesamte Abdichtung wird also mit einem einzigen O-Ring 26 erreicht.

Durch die vorbeschriebene Fixierung der Spreizhülse 16 mittels der Flügel 20 und der Eindrehung 21 hat den Vorteil, daß die Spreizhülse 16 praktisch ohne Spiel auch in axialer Richtung des Teiles 12 an diesem befestigt ist, so daß das gesamte Rückstellvermögen des O-Ringes 26 für das Einrasten der Spreizflügel 19 an der Fläche 10 und das elastische Anliegen des O-Ringes 26 gegen die Dichtungsflächen 27 und 28 genutzt werden kann.

Um insbesondere bei dynamischen bzw. wechselnden Lasten einen Verschleiß der Anlagefläche 10 durch die Spreizflügel 19 zu vermeiden, weist die Spreizhülse 19 zumindest an diesen Spreizflügeln 19 leicht abgerundete Kanten auf. Weiterhin können die Spreizflügel an ihren freien Enden so abgeschrägt sein, daß sie dort möglichst großflächig gegen die Anlagefläche 10 anliegen. Um trotz großflächiger Anlage das Einrasten der Spreizflügel 19 hinter die Anlagefläche 10 zu erleichtern, kann es aber zweckmäßig sein, die Spreizflügel 19 an ihren freien Enden mit einer nicht abgeschrägten Kante herzustellen und anstelle hiervon die Anlagefläche 10 leicht abzuschrägen, d.h. als Kegelfläche auszubilden, um so die großflächige Anlage der Spreizflügel 19 an der Anlagefläche 10 zu erzielen. Weiterhin besteht das Element 5 zumindest im Bereich der Anlagefläche 10 aus einem harten, verschleißfesten Material, d.h. aus hochwertigem Stahl.

Die Montage der Spreizhülse 16 an dem Teil 12 ist in besonders einfacher Weise durch Aufschieben der Spreizhülse 16 vom Ende 12' her möglich. Die Durchmesser sind hierbei selbstverständlich so gewählt, daß die Spreizhülse 16 beim Aufschieben nicht überdehnt wird, d.h. nach dem Aufschieben das Teil 12 im Bereich der Eindrehung 21 fest anliegend umschließt.

Für das Einstecken des Elementes 11 in das jeweilige Element 5 ist wegen der hierbei notwendigen elastischen Verformung der Spreizflügel 19 eine gewisse Kraft erforderlich. Um diese Kraft aufbringen zu können und dabei insbesondere auch zu vermeiden, daß beim Einschieben des Elementes 11 in das Element 5 eine mechanische Krafteinwirkung auf den mit dem Element 11 verbundenen Schauch 3 erfolgt und dieser möglicherweise durch übermäßiges Biegen bzw. Abknicken beschädigt wird, ist der Kopf 14 in der oben beschriebenen Weise als relativ großflächiges bzw. großvolumiges Handstück oder Angriffselement für ein Montagewerkzeug ausgebildet.

Fig. 4 zeigt ein Kupplungsstück 4a, welches sich von dem Kupplungsstück 4 im wesentlichen nur dadurch unterscheidet, daß das dem Element 11 entsprechende Element 11a den Kopf 14 nicht aufweist, und daß anstelle des Schlauches 3 mit dem Element 11a das eine Ende eines gekrümmten Rohrstückes 29 oder geradlinigen Rohrstückes 30 beispielsweise durch Hartlöten fest verbunden ist.

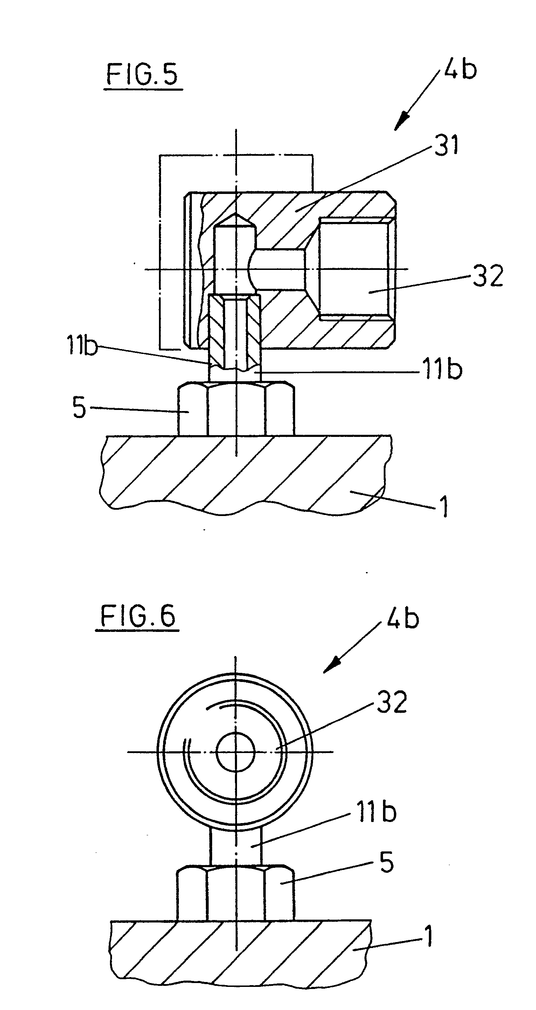

Die Fig. 5 und 6 zeigen das Kupplungsstück 4b, welches sich vom Kupplungsstück 4 wiederum nur hinsichtlich des dem Element 11 entsprechenden Elementes 11b unterscheidet, d.h. das Element 11b besitzt an seinem oberen Ende ein Winkelstück 31 mit einem Anschlußgewinde 32, mit dem eine in ihrer Art an sich beliebig ausgebildete Hydraulikleitung mit einer normalen Verschraubung befestigt werden kann. Bei dem Kupplungsstück 4b dient das zylinderförmig ausgebildete Winkelstück 31 gleichzeitig als Handhabe beim Einstecken des Elementes 11b in das Element 5.

Fig. 7 zeigt in einer Darstellung ähnlich der Fig. 1 ein zweiteiliges Kupplungsstück 4c, welches in vielerlei Hinsicht dem Kupplungsstück 4 der Fig. 1 sehr ähnlich ist, allerdings in einigen Aspekten eine wesentliche Verbesserung darstellt.

In der Fig. 7 ist 1 wieder das Hydraulik-Bauelement mit der in diesem Bauelement ausgebildeten Flüssigkeitsführung 2, die allerdings abweichend zu Fig. 1 im wesentlichen einen konstanten Querschnitt aufweist (Abschnitt 2'') und sich lediglich im Bereich der Außenseite des Hydraulik-Bauteils 1, an der das Kupplungsstück 4c vorgesehen ist, erweitert, und zwar zur Bildung des mit dem Innengewinde versehenen Abschnittes 2'.

Das Kupplungsstück 4c besteht wiederum aus dem Element 5, welches in gleicher Weise wie das Element 5 des Kupplungsstückes 4 ausgebildet und im Abschnitt 2' befestigt ist. In der Fig. 7 ist daher das Element 5 mit all seinen Teilen mit den gleichen Bezugsziffern bezeichnet, wie sie auch in den Figuren 1 - 3 verwendet sind.

Das Kupplungsstück 4c besteht weiterhin aus dem Element 11c, welches hinsichtlich seiner Ausbildung dem Element 11 sehr ähnlich ist und im wesentlichen aus einem als Rohrstück oder Hülse ausgebildeten Teil 32 besteht, welches eine kreiszylinderförmige Umfangsfläche aufweist und mit einem Kanal 34 versehen ist, der achsgleich mit der Achse des Teiles 33 liegt. Am unteren Ende ist der Kanal 34 offen. Am oberen Ende endet der Kanal 34 in einem als Winkelstück ausgebildeten Kopf 35, der beispielsweise einstückig mit dem Teil 33 hergestellt ist und eine mit einem Innen- bzw. Anschlußgewinde 36 versehene Öffnung zum Anschließen des Hydraulikschlauches 3 aufweist. Auch bei dem Kupplungsstück 4c dient der Kopf 35 wiederum als Handhabe beim Einschieben des Elementes 11c in das Element 5.

Zwischen dem Kopf 35 und dem unteren Ende 33' des Teiles 32 sind an diesem über den Umfang wegstehende, federnd radial nach innen bewegbare Rastelemente vorgesehen, mit denen das als Stecknippel ausgebildete Element 11c durch Einrasten in dem äußeren Element 5 gehalten ist. Die Rastelemente sind von einer einzigen Spreizhülse 37 gebildet, die aus einem Zuschnitt 38 aus einem Federstahl-Blech einstückig durch Stanzen und Rollen hergestellt ist. Die Spreizhülse 37 ist bei 39 geteilt und besitzt u.a. einen hülsenartigen bzw. hohlzylinderartigen Abschnitt 40. An einer gemeinsamen Seite des Abschnittes 40, d.h. bei der für die Fig. 7 gewählten Darstellung an der oberen Seite dieses Abschnittes sind sechs über diese Seite nach oben wegstehende Spreizflügel 41 vorgesehen, die an ihrer bezogen auf die Achse der Spreizhülse 37 innenliegende Seite konkav und an ihrer außenliegenden Seite konvex, jeweils in etwa kreisbogenförmig gekrümmt und derart radial nach außen gebogen sind, daß der radiale Abstand der Spreizflügel 41 von der Achse der Spreizhülse 37 mit zunehmendem Abstand vom Abschnitt 40 zunimmt und die Spreizflügel 41 einen Winkel mit der Achse der Spreizhülse einschließen. Die Spreizflügel 41 weisen in Umfangsrichtung der Spreizhülse 37 in etwa die gleiche Breite auf. Wie insbes. die Figuren 8 und 9 zeigen, sind (im Gegensatz zur Spreizhülse 16) bei der Spreizhülse 37 die Spreizflügel 41 über den gesamten Umfang gleichmäßig verteilt vorgesehen. Insbes. sind bei der Spreizhülse 37 auch unmittelbar an die Teilung 39 anschließend beidseitig jeweils ein Spreizflügel 41 vorgesehen. Ein spreizflügelfreier Bereich, wie er bei der Spreizhülse 16 an den Flügeln 20 vorhanden ist, fehlt somit bei der Spreizhülse 37.

Zur Fixierung der Spreizhülse 37 am Teil 33 ist eine ebenfalls aus einem Zuschnitt aus Stahlblech oder Federstahlblech durch Rollen hergestellte Hülse 42 (Stütz- oder Befestigungshülse) vorgesehen, die die Achse des Teiles 33 konzentrisch umschließt und mit ihrem in der Fig. 7 oberen Bereich den Abschnitt 40 der Spreizhülse 37 manschettenartig umschließt und diesen Abschnitt gegen die Umfangsfläche des Teiles 33 bzw. gegen die Bodenfläche einer in der Umfangsfläche des Teiles 33 zur Aufnahme des Abschnittes 40 vorgesehenen nutenförmigen Vertiefung drückt. Mit ihrem in der Fig. 7 unteren Teilbereich steht die Hülse 42 über den Abschnitt 40 vor und liegt gegen die Umfangsfläche des Teiles 33 an und ist an diesem Teil durch eine in eine Umfangsnut des Teiles 33 eingreifende Sicke 43 oder auf andere Weise gesichert, beispielsweise durch Schweißen (Punktschweißen) usw. In geeigneter Weise (z.B. Schweißen) sind auch die Hülse 42 und der Abschnitt 40 der Spreizhülse 37 miteinander verbunden.

Durch die Hülse 42 ist einerseits die Spreizhülse 37 insbes. auch gegen axiales Verschieben am Teil 33 gesichert. Durch die Hülse 43 wird weiterhin auch verhindert, daß sich der Abschnitt 40 der Spreizhülse 37 radial nach außen spreizt, wenn die Spreizflügel 41 federnd radial nach innen bewegt werden. Die Hülse 42 trägt somit auch ganz entscheidend zur Verbesserung der Funktionsfähigkeit und Betriebssicherheit des Kupplungsstückes 4c bei.

Die Eindrehung bzw. nutenförmige Ausnehmung 44 zur Aufnahme des Abschnittes 40 weist an ihrem in der Fig. 7 oberen Randbereich wiederum einen kegelstumpfförmigen Abschnitt 44' auf, der dem Abschnitt 21''' des Elementes 11 entspricht und eine Anlage-Stützfläche für die Spreizflügel 41 bildet, um diese in ihrer Wirkung zu unterstützen.

Wie die Fig. 7 zeigt, besitzt das rohrartige Teil 33 zwei Abschnitte, und zwar ausgehend von dem Kopf 35 einen Abschnitt 33'' mit einem etwas größeren Außendurchmesser, der an den Durchmesser der Bohrung 9 angepaßt ist und an diesen nach unten anschließend den Abschnitt 33''', der einen etwas kleineren Außendurchmesser aufweist und bis an das Ende 33' reicht. Der Übergang zwischen den Abschnitten 33'' und 33''' befindet sich etwa im Bereich der freien Enden der Spreizflügel 41. Die Differenz der Durchmesser der Abschnitte 33'' und 33''' ist mindestens gleich, bevorzugt jedoch etwas größer als die doppelte Materialstärke des für die Spreizhülse 37 verwendeten Materials. Weiterhin ist der Außendurchmesser der Hülse 42 gleich, bevorzugt jedoch kleiner als der Außendurchmesser des Abschnittes 33''.

Im Bereich des unteren Endes 33' ist das Teil 33 mit einer ringförmigen Nut 45 versehen, die nur zum Umfang hin offen ist. In dieser Nut sind ein Dichtungsring bzw. O-Ring 46 sowie ein Stützring 47 vorgesehen, und zwar letzterer an der dem Ende 33' abgewandten Seite des Dichtungsringes 46.

Die Verwendung des Kupplungsstückes 4c folgt in der gleichen Weise, wie dies vorstehend für das Kupplungsstück 4 beschrieben wurde, d.h. die beispielsweise in einem Kraftfahrzeug befestigten und mit den Elementen vormontierten Hydraulik-Bauteile können durch einfaches Einstecken der an den Schläuchen 3 vormontierten Elemente 11c montagefreundlich miteinander verbunden werden. Bei diesem Einstecken werden die Spreizflügel 41 radial nach innen gedrückt. Nach dem Passieren der Schulter bzw. Ringfläche spreizen sich die Spreizflügel 41 wieder auseinander und rasten mit ihren freien Enden hinter der Ringfläche 10 des jeweiligen Elementes 5 ein, so daß die Elemente 5 und 11c durch Einrasten unlösbar miteinander verbunden sind und damit auch die Hydraulikverbindung zwischen dem Schlauch und dem entsprechenden Hydraulik-Bauteil hergestellt ist. Der O-Ring 46 liegt dabei dichtend gegen die Innenfläche der Flüssigkeitsführung bzw. des Abschnittes 2'' an, während der Stützring 47 in bekannter Weise ein Extrudieren des Dichtungsringes in den abzudichtenden Spalt verhindert. Da der Dichtungsring 46 lediglich gegen eine kreiszylinderförmige, die Achse des Teiles 33 konzentrisch umschließende Fläche anliegt und nicht zugleich auch gegen eine der Flüssigkeitsführung ausgebildete Schulter, wie dies bei dem Dichtungsring 26 des Kupplungsstückes 4 der Fall ist, kann das Element 11c auch nach seiner Verbindung mit dem Element 5 um die Achse des Teiles 33 um 360° oder mehr gedreht bzw. geschwenkt werden, und zwar ohne Beschädigung des Dichtungsringes 46. Hierdurch ist ein Ausrichten des Schlauches 3 bzw. des als Winkelstück ausgebildeten Kopfes 35 nach der Verbindung der Elemente 5 und 11c möglich, wodurch die Montage noch weiter vereinfacht wird. Da der Dichtungsring 46 lediglich gegen die zylinderförmige Innenfläche der Flüssigkeitsführung 2 anliegt, ist auch (im Vergleich zum Kupplungsstück 4) das Einbringen des Elementes 11c in das jeweilige Element 5 mit geringerem Kraftaufwand möglich. Ein Komprimieren des Dichtungsringes 46 in Einschieberichtung ist nicht notwendig.

Da bei dem Kupplungsstück 4c die Spreizhülse 37 an ihren gesamten Umfang die Spreizflügel 41 aufweist, ergibt sich eine im Vergleich zum Kupplungsstück 4 wesentlich verbesserte Verankerung des Elementes 11c im Element 5, und zwar hinsichtlich statischer und dynamischer Belastungen. Um auch hier insbes. bei dynamischen bzw. wechselnden Lasten den Verschleiß der Anlagefläche 10 durch die Spreizflügel 41 zu reduzieren, weist die Spreizhülse 37 an diesen Spreizflügeln wieder leicht abgerundete Kanten auf. Weiterhin sind die Spreizflügel 41 bevorzugt an ihren freien Enden so abgeschrägt, daß sie dort möglichst großflächig gegen die Anlagefläche 10 anliegen.

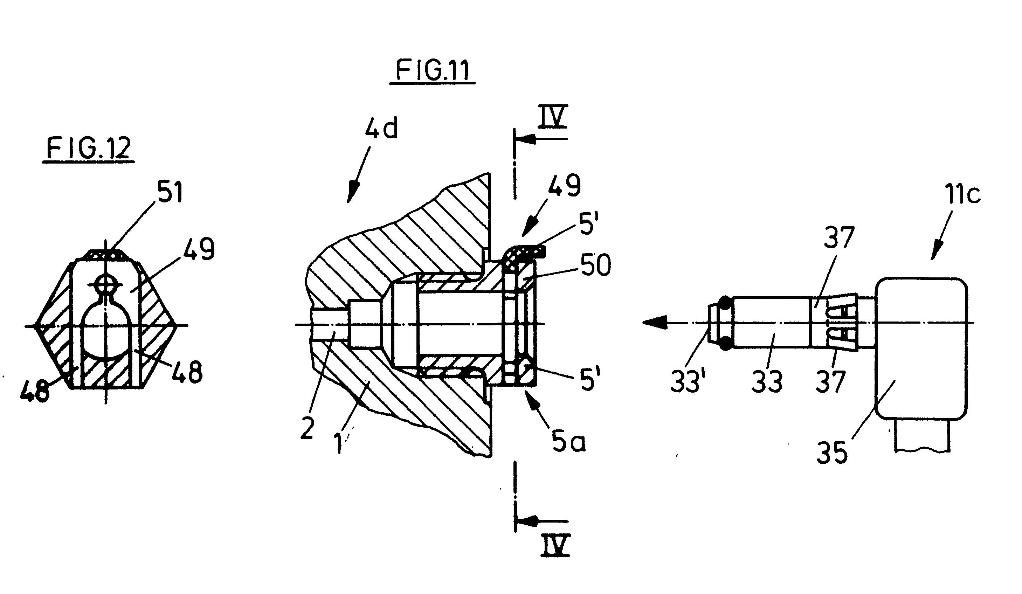

Die Figuren 11 und 12 zeigen ein Kupplungsstück 4d, welches sich von dem Kupplungsstück 4c im wesentlichen nur dadurch unterscheidet, daß anstelle des Elementes 5 ein Element 5a vorgesehen ist, dessen Bohrung 9 einen konstanten Querschnitt aufweist. Die der Schulter bzw. der Anlagefläche 10 entsprechende Anlagefläche ist bei dem Kupplungsstück 4d von zwei Gabelarmen 48 eines gabelförmigen Verriegelungselementes 49 gebildet. Das Verriegelungselement 49 ist mit seinen Gabelarmen 48 von der Seite her in eine in den als Sechskant ausgebildeten Kopf bzw. Abschnitt 5' eingebrachte und die Bohrung 9 schneidende Ausnehmung 50 eingesetzt, und zwar derart, daß die beiden Gabelarme 48, die mit ihren in der Bohrung 9 liegenden Bereichen die Rast- bzw. Anlagefläche für die Spreizflügel 41 bilden, in einer Ebene senkrecht zur Achse der Bohrung liegen und das Verriegelungselement 49 mit einem abgewinkelten Ende 51 über den Umfang des Abschnittes 5', d.h. über eine Sechskant-Seite dieses Abschnittes wegsteht. Durch federndes Einrasten am Abschnitt 5' oder auf andere, geeignete Weise ist das Verriegelungselement 49 an diesem Abschnitt 5' gegen ungewolltes Herausrutschen aus der Ausnehmung 50 gesichert. Wie die Fig. 12 zeigt, sind die beiden Gabelarme 48 an ihren innenliegenden Seiten insbes. auch im Bereich des Endes 51 kreisbogenförmig so geformt, daß sie in bezug auf die Achse des Elementes 5a auf einem möglichst großen Winkelbereich als Anlagefläche für die Spreizflügel 41 wirksam sind.

Bei am Element 5a vorgesehenen Verriegelungselement 49 erfolgt die Verbindung der Elemente 5a und 11c in der gleichen Weise, wie dies vorstehend für das Kupplungsstück 4c beschrieben wurde. Mit Hilfe eines geeigneten Werkzeuges, beispielsweise mit Hilfe eines Schraubenziehers kann zum Lösen der Verbindung das Verriegelungselement 49 aus dem Element 5a entfernt werden, womit nach Freigabe der Spreizflügel 41 das Element 11c aus dem Element 5a herausgezogen werden kann. Vorteilhaft bei dieser Ausführung ist nicht nur das relativ einfache Wiederlösen der beiden Elemente des Kupplungsstückes 1d, sondern vorteilhaft ist auch, daß das Element 5a mit dem Verriegelungselement 49 praktisch an beliebiger Stelle einer Außenfläche des Hydraulik-Bauteils 1 vorgesehen werden kann, da durch die Unterbringung des Verriegelungselementes 49 in dem Abschnitt 5' des Elementes 5a die wieder lösbare Verbindung unter Verwendung des Verriegelungselementes 49 praktisch an jeder Stelle einer Fläche des Hydraulik-Bauteiles vorgesehen werden kann.

Die kegelstumpfförmigen Abschnitte 21''' bzw. 44' bei den Kupplungsstücken 4 bis 4d wirken nicht nur abstützend für die Spreizflügel 19 bzw. 41 der Spreizhülsen 16 und 37, sondern diese kegelstumpfförmigen Flächen erhöhen die Betriebssicherheit auch insofern, als durch sie nach der Montage der jeweiligen Spreizhülse 16 bzw. 37 auf jeden Fall zwangsläufig sichergestellt ist, daß die Spreizfinger 19 bzw. 41 die erforderliche Abspreizung aufweisen, d.h. in der erforderlichen Weise über die Umfangsfläche des jeweiligen Elementes 11, 11a, 11b bzw. 11c wegstehen. Durch die kegelstumpfförmigen Abschnitte 21''' und 44 ist es weiterhin auch möglich, die jeweilige Spreizhülse 16 bzw. 37 durch einfaches Stanzen und Rollen beispielsweise aus dem Zuschnitt 38 herzustellen, ohne daß ein weiterer Arbeitsgang für das Abspreizen der Spreizflügel 19 bzw. 41 notwendig ist. Dieses erfolgt dann zwangsläufig durch die Abstützflächen bei der Montage der jeweiligen Spreizhülse 19 bzw. 37. Hiermit ergibt sich eine wesentliche Vereinfachung der Herstellung.

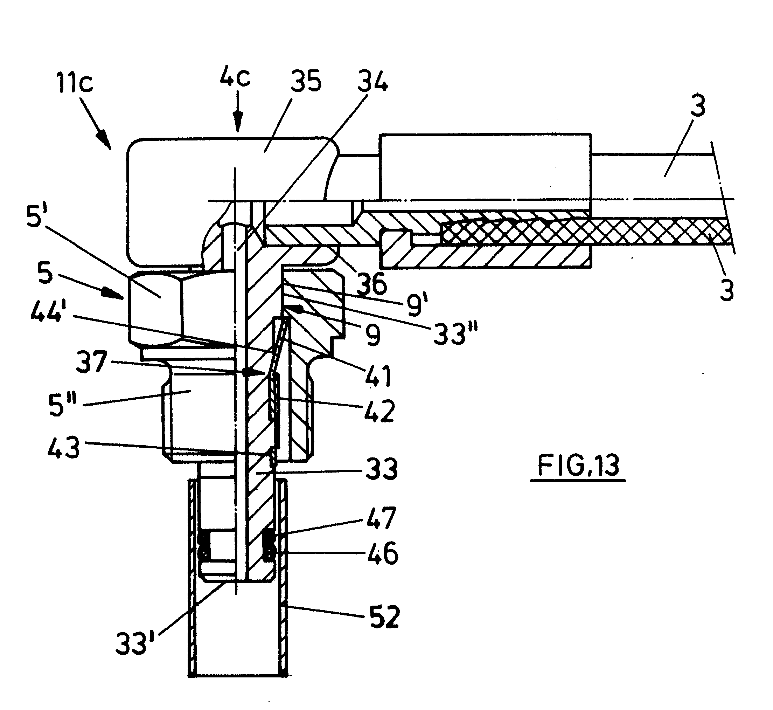

Fig. 13 zeigt eine Entriegelungshülse 52, d.h. ein Werkzeug, welches insbes. für die Verwendung bei dem Kupplungsstück 4c bestimmt ist und mit welchem es problemlos möglich ist, die beiden Elemente 5 und 11c dieses Kupplungsstückes im Reparaturfalle, d.h. bei aus dem Hydraulik-Bauteil 1 herausgeschraubtem Element 5 wieder voneinander zu trennen. Die aus Metall hergestellte Entriegelungshülse 52, die z.B. von einer Länge eines Rohrstückes gebildet ist oder aus einem Zuschnitt aus Metallblech durch Rollen hergestellt ist, besitzt einen Innendurchmesser, der gleich dem Außendurchmesser der Hülse 42 ist, und einen Außendurchmesser, der etwas kleiner ist als der Durchmesser der Bohrung 9 des Elementes 5.

Um die Entriegelungshülse 52 verwenden zu können, ist das Element 11c so ausgebildet, daß der Außendurchmesser der Hülse 42 wenigstens um die doppelte Wandstärke der Entriegelungshülse 52 kleiner ist als der Durchmesser der Bohrung 9. Zum Lösen des Elementes 11c von dem aus dem Hydraulik-Bauteil 1 herausgeschraubten Element 5 wird die Entriegelungshülse 52 vom Ende 33' her auf das Teil 33 aufgeschoben, und zwar in das offene Ende des Elementes 5 hinein bis in den Bereich der Spreizflügel 41. Diese werden dann mit der Entriegelungshülse 52 radial nach innen gedrückt, so daß sie von der Anlagefläche 10 freikommen und das Element 11c vom Element 5 abgezogen werden kann. Da die Spreizflügel 41 gleichmäßig um den Umfang des Teiles 33 verteilt vorgesehen sind, d.h. die Spreizhülse 37 keinen Bereich ohne Spreizflügel 41 aufweist, ist beim Aufschieben der Entriegelungshülse 52 auf die Spreizarme 41 eine exakte Zentrierung der Entriegelungshülse in bezug auf die Achse des Teiles 33 gewährleistet und dadurch mit der Entriegelungshülse 52 ein gleichmäßiges Nachinnendrücken sämtlicher Spreizflügel 41 möglich. Das Entriegeln mit der Entriegelungshülse 52, d.h. das gleichmäßige Nach-Innen-Drücken der Spreizflügel 41 wird weiterhin auch durch den die Anlage- bzw. Stützfläche für den Spreizfinger 41 bildenden Abschnitt 44' unterstützt.

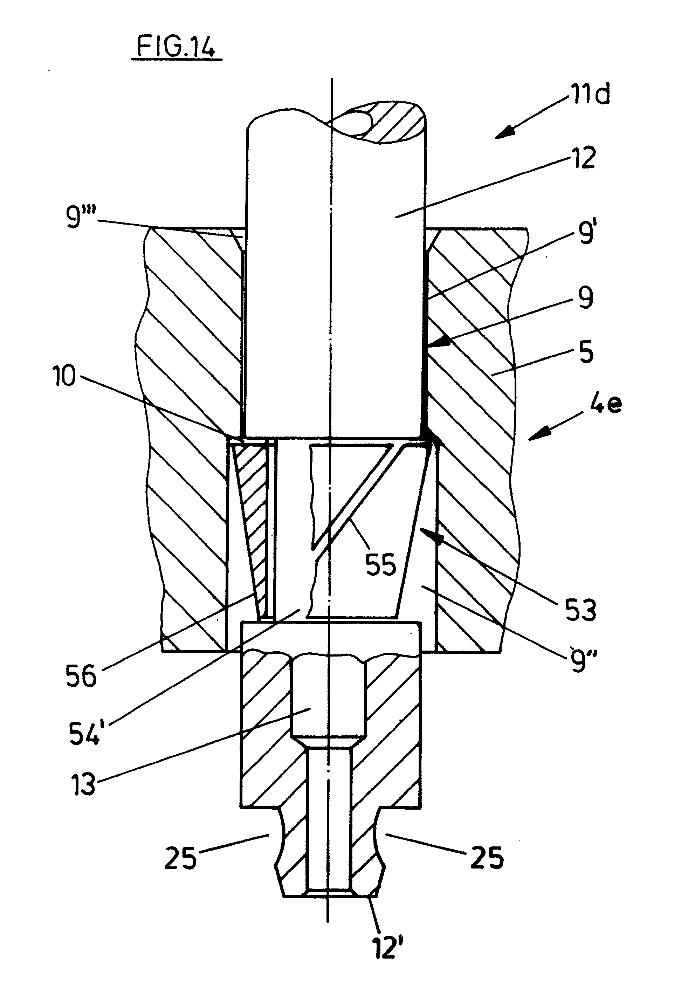

Fig. 14 zeigt ein Kupplungsstück 4e, welches im wesentlichen dem Kupplungsstück 4 entspricht, bei dem jedoch anstelle der Spreizhülse 16 ein Ring 53 vorgesehen ist, der in einer der Eindrehung 21 entsprechenden Eindrehung 54 des Elementes 11d angeordnet ist. Im Bereich der Eindrehung 54 besitzt das Element 11d einen gleichbleibenden Außendurchmesser, d.h. es fehlt dort insbesondere der kegelstumpfförmige Abschnitt 21'''. Der Ring 53 ist geschlitzt, d.h. mit einem durchgehenden Schlitz 55 versehen, der schräg verlaufend vorgesehen ist, d.h. der Schlitz 55 liegt in einer gedachten Ebene, die von der Mittelachse des Elementes 11d unter einem Winkel kleiner als 90° geschnitten wird. Der Ring 53, der mit seiner Achse achsgleich oder parallel zur Achse des Elementes 11d liegt, kann sich mit seiner oberen und seiner unteren Stirnfläche jeweils gegen eine die Eindrehung 54 begrenzende Ringfläche abstützen. An der Umfangsfläche ist der Ring 53 kegelstumpfförmig derart ausgebildet, daß sich der Außendurchmesser dieses Ringes bei der für die Fig. 14 gewählten Darstellung von der oberen Stirnfläche zur unteren Stirnfläche des Ringes 53 hin verringert, d.h. der Ring 53 mit seiner den kleineren Außendurchmesser aufweisenden Stirnfläche dem Ende 12' des Elementes 11d näher liegt als mit seiner den größeren Außendurchmesser aufweisenden Stirnseite. Zumindest an der den größeren Durchmesser aufweisenden Stirnseite ist der Außendurchmesser des Ringes 53 größer als der Durchmesser des Abschnittes 9' der Bohrung 9, so daß das Element 11d durch den Ring 53 am Element 5 verankert ist. Durch den Schlitz 55 kann der aus einem federnden bzw. elastischen Material, vorzugsweise aus Federstahl hergestellte Ring 53 als Feder- oder Spreizring wirken, d.h. beim Einschieben des Elementes 11d in das Element 5 bzw. die dortige Bohrung 9 wird über die kegelstumpfförmige Außenfläche 56, die gegen die Fläche der Bohrung 9 zur Anlage kommt, der Ring 43 zunächst im Sinne einer Verkleinerung seines Außendurchmessers elastisch verformt und schnappt dann hinter die Anlagefläche 10, womit das Element 11d verriegelt ist. Es versteht sich, daß im verriegelten Zustand der Innendurchmesser des Ringes 53 größer ist als der Außendurchmesser des Elementes 11d im Bereich der Eindrehung 54. Durch den schrägen Verlauf des Schlitzes 55 wird trotz einer relativ großen Schlitzbreite eine zuverlässige Verankerung des Elementes 11d im Element 5 auch bei den bei hydraulischen Anwendungen hohen Betriebsdrücken, beispielsweise etwa 250 bar, erreicht, und zwar dadurch, daß sich die Schlitzenden in der oberen und unteren Stirnfläche des Ringes 53 nicht unmittelbar gegenüberliegt. Durch die kegelstumpfförmige Außenfläche 56 ist auch bei dieser Ausführung im Bedarfsfall ein Entriegeln mittels der Entriegelungshülse 52 möglich.

Die Erfindung wurde voranstehend an Ausführungsbeispielen beschrieben. Es versteht sich, daß zahlreiche Änderungen und Abwandlungen möglich sind, ohne daß dadurch der die Erfindung tragende Erfindungsgedanke verlassen wird. Unabhängig von der speziellen Ausgestaltung verbinden alle beschriebenen Ausführungsformen den Vorteil, daß beim Einbau der Hydraulik-Komponenten beispielsweise in ein Fahrzeug oder in eine Maschine die Verbindung zwischen den einzelnen Komponenten in einfacher Weise lediglich durch eine Steckmontage durchgeführt werden kann, mit dem Vorteil einer Schraubverbindung, mit der es möglich ist, die betreffende Verbindung im Reparaturfalle wieder zu lösen. Bei den Kupplungsstücken 4, 4a, 4b, 4c ist dies nur mit einem entsprechenden Werkzeug möglich. Die Kupplungsstücke weisen selbstverständlich solche Abmessungen auf, daß sie bei den üblichen Hydraulik-Komponenten verwendet werden können. Bei einer bevorzugten Verwendung für Komponenten der Mikro-Hydraulik beträgt die Länge der Elemente 5 bzw. 5a (Abstand der Stirnflächen 6 und 7) beispielsweise nur 14 mm. Die übrigen Abmessungen sind dann ebenfalls entsprechend klein.

Aufstellung der verwendeten Bezugzeichen

1
Hydraulik-Bauteil
2
Flüssigkeitsführung
2', 2", 2'''
Abschnitt
3
Schlauch
4, 4a, 4b, 4c, 4d, 4e
Kupplungsstück
5, 5a
Element
5', 5"

Abschnitt
6
Stirnseite
7
Stirnseite
8
Außengewinde
9
Bohrung
9', 9"
Abschnitt
9'''
Abschrägung
10
Anlagefläche
11, 11a, 11b, 11c, 11d
Element
12
Teil
12'
Ende
13
Kanal
14
Kopf
15
Kanal
16
Spreizhülse
17
Teilung
18
Abschnitt
19
Spreizflügel
20
Flügel
21
Eindrehung
21', 21", 21'''
Abschnitt
22
Ringfläche
23
Ringfläche
24
Abflachung
25
Nut
26
O-Ring
27
Dichtungsfläche
28
Dichtungsfläche
29
Rohrstück
30

Rohrstück
31
Winkelstück
32
Anschlußgewinde
33
Teil
33'
Ende
33"
Abschnitt
33'"
Abschnitt
34
Kanal
35
Kopf
36
Anschlußgewinde
37
Spreizhülse
38
Zuschnitt
39
Teilung
40
Abschnitt
41
Spreizflügel
42
Hülse
43
Sicke
44
Ausnehmung
44'
Abschnitt
45
Nut
46
O-Ring
47
Stützring
48
Gabelarm
49
Verriegelungselement
50
Ausnehmung
51
Ende
52
Entriegelungshülse
53
Ring
54
Eindrehung
55

Schlitz
56
Außenfläche

**Patentansprüche**

1.  Kupplungsstück, welches zur Herstellung einer Hydraulik-Verbindung zwischen einer ersten und einer zweiten Hydraulik-Komponente an der ersten Komponente befestigbar und in einer an der zweiten Komponente gebildeten Aufnahme vorzugsweise durch Einschrauben lösbar verankerbar ist, wobei das Kupplungsstück (4, 4a, 4b, 4c) wenigstens zweiteilig mit einem äußeren Element (5, 5a) und einem inneren Element (11, 11a, 11b, 11c) ausgebildet ist, wobei äußere Element (5, 5a) hülsenartig mit einer durchgehenden Öffnung (9) ausgeführt ist, wobei das äußere Element an seiner Außenfläche Mittel vorzugsweise ein Gewinde (8) für eine wiederlösbare Verankerung besitzt und auch eine Werkzeugangriffsfläche bildet, wobei das innere Element (11, 11a, 11b, 11c) zumindest in einem das eine Ende (12', 33') dieses Elementes bildenden Teilabschnitt (12, 33) ebenfalls hülsenartig mit einem an diesem einen Ende (12', 33') offenen Kanals (13, 14) ausgebildet ist, der am anderen Ende des inneren Elementes (11, 11a, 11b, 11c), an dem (Ende) die erste Hydraulik-Komponente (3, 29, 30) befestigbar ist, ebenfalls offen ist, wobei das innere Element (11, 11a, 11b, 11c) mit seinem hülsenartigen Teilabschnitt (12, 33) von der Stirnseite (6) des äußeren Elementes (5, 5a) her in dessen Öffnung (9) einsteckbar und dort durch hinter eine Rastfläche (10) des äußeren Elementes (5) einrastende federnde Spreiz- bzw. Rastflügel (19, 41) verriegelbar ist, die an einer an dem inneren Element (11, 11a, 11b, 11c) befestigten Spreizhülse (16, 37) gebildet ist und in einer gegenüber der Achse der Spreizhülse geneigten Richtung wegstehen, dadurch gekennzeichnet, daß am inneren Element (11, 11a, 11b, 11c) eine als Kegelfläche ausgebildete Anlagefläche (21'", 44') für die Abstützung der Spreizflügel (19, 41) gebildet ist.

2.  Kupplungsstück nach Anspruch 1, dadurch gekennzeichnet, daß die Spreizflügel (19, 41) von einem hülsen- oder hohlzylinderartigen Abschnitt (18, 40) der Spreizhülse (16, 37) wegstehen, daß die Spreizhülse (16, 37) im wesentlichen mit diesem hülsen- oder hohlzylinderartigen Abschnitt (18, 40) an dem inneren Element (11, 11a, 11b, 11c) gehalten ist, daß die Anlagefläche (21'", 41') zur Abstützung der Rastflügel (19, 41) im Bereich einer sich an dem hülsenförmigen Abschnitt (18, 40) anschliessenden Teillänge dient, daß der hülsenförmige Abschnitt (40) der Spreizhülse (37) vorzugsweise von einer Hülse (42) umschlossen ist, die am inneren Element (11c) befestigt bzw. gesichert ist, wobei vorzugsweise die Spreizflügel (41) gleichmäßig verteilt um den gesamten Umfang des inneren Elementes (11c) vorgesehen sind.

3. Kupplungsstück nach Anspruch 1 oder 2, dadurch gekennzeichnet, daß die Spreizhülse (16, 37) an ihren beiden, in Richtung der Achse der Spreizhülse gegeneinander versetzten Enden jeweils wenigstens eine Anlagefläche bildet, die zur axialen Sicherung der Spreizhülse (16) auf dem inneren Element (11, 11a, 11b) jeweils gegen eine von wenigstens zwei an diesem Element (11, 11a, 11b) , bevorzugt an einer dortigen Eindrehung (21) ausgebildeten Gegenflächen (22, 23) anliegt, und daß der Abstand der Gegenflächen (22, 23) gleich dem Abstand der beiden Anlageflächen ist, wobei vorzugsweise die Spreizhülse (16) zusätzlich zu den gegenüber der Achse der Spreizhülse (16) geneigten Spreizflügeln (19) wenigstens einen, bevorzugt zwei weitere Flügel (20) aufweist, der bzw. die bevorzugt zusammen mit den Spreizflügeln (19) über eine gemeinsame Seite des hülsenartigen Abschnittes (18) wegstehen, jedoch im wesentlichen parallel zur Achse der Spreizhülse (16) liegen und am freien Ende eine der wenigstens zwei Anlageflächen der Spreizhülse (16) bilden.

4. Kupplungsstück, welches zum Herstellen einer Hydraulik-Verbindung zwischen einer ersten und einer zweiten Hydraulik-Komponente an der ersten Komponente befestigbar und in einer an der zweiten Komponente gebildeten Aufnahme vorzugsweise durch Einschrauben lösbar verankerbar ist, wobei das Kupplungsstück (4e) wenigstens zweiteilig mit einem äußeren Element (5) und einem inneren Element (11d) ausgebildet ist, wobei das äußere Element (5) hülsenartig mit einer durchgehenden Öffnung (9'') ausgeführt ist, wobei das äußere Element an seiner Außenfläche Mittel, vorzugsweise ein Gewinde (8) für eine wiederlösbare Verankerung besitzt sowie auch eine Werkzeugangriffsfläche bildet, wobei das innere Element (11d) zumindest in einem das eine Ende (12') dieses Elementes bildenden Teilbereichs (12) ebenfalls hülsenartig mit einem an diesem einen Ende (12') offenen Kanal (13) ausgebildet ist, der an einem anderen Ende des inneren Elementes (11d), an dem (Ende) die erste Hydraulik-Komponente befestigbar ist, ebenfalls offen ist, und wobei das innere Element (11d) mit seinem hülsenartigen Teilabschnitt (12) von einer Stirnseite (6) des äußeren Elementes (5) her in dessen Ausnehmung bzw. Öffnung (9) einsteckbar und dort durch Einrasten eines federnden Rastelementes hinter eine Rastfläche (10) verriegelbar ist, dadurch gekennzeichnet, daß das federnde Rastelement ein geschlitzter Ring (53) aus einem federnden bzw. elastischen Material, vorzugsweise aus Federstahl ist.

5. Kupplungsstück nach einem der Ansprüche 1 bis 4, dadurch gekennzeichnet, daß das innere Element (11, 11a, 11b, 11c) nach dem Verbinden mit dem äußeren Element (5, 5a) mit seinem einen Ende (12', 33') innerhalb der Aufnahme (2) der zweiten Fluidtechnik-Komponente (1) aus dem äußeren Element (5, 5a) vorsteht.

6. Kupplungsstück nach Anspruch 5, dadurch gekennzeichnet, daß unter Verwendung wenigstens einer Dichtung (26, 46) ein nach außen hin abgedichteter Übergang zwischen dem einen Ende (12', 33') des inneren Elementes (11, 11a, 11b, 11c) bzw. dem dort offenen Kanal (13, 34) des inneren Elementes (11, 11a, 11b, 11c) und einer in der zweiten Fluidtechnik-Komponente (1) ausgebildeten Flüssigkeitsführung (2) gebildet ist, wobei vorzugsweise die Dichtung ein an dem einen Ende (12', 33') des inneren Elementes (11, 11a, 11b, 11c) vorgesehener Dichtungs- oder O-Ring (26, 46) ist, der eine Achse des inneren Elementes (11c) konzentrisch umschließt und bei miteinander verbundenen Elementen (5, 5a; 11c) gegen eine in der Aufnahme (2', 2'') gebildete, die Achse des inneren Elementes (11c) konzentrisch umschließende zylinderförmige Dichtungsfläche anliegt und/oder der aus elastischem Material mit großem Rückfedervolumen ist und bei miteinander verbundenen Elementen (5; 11, 11a, 11b) gegen wenigstens eine in der Aufnahme (2', 2'') gebildete Dichtungsfläche (27, 28) anliegt.

7. Kupplungsstück nach einem der Ansprüche 1 bis 6, dadurch gekennzeichnet, daß das innere Element (11, 11b, 11c) an einer Teillänge, die nach dem Einführen des inneren Elementes (11, 11b, 11c) über die eine Stirnseite (6) des äußeren Elementes (5, 5a) vorsteht, mit einem im Querschnitt verbreiterten Kopfstück (14, 31, 35) ausgebildet ist, wobei dieses Kopfstück vorzugsweise im Bereich des anderen Endes des inneren Elementes (11, 11b, 11c) vorgesehen ist.

8. Kupplungsstück nach einem der Ansprüche 1 bis 7, dadurch gekennzeichnet, daß die Rastfläche (48) von wenigstens einem Verriegelungselement (49) gebildet ist, welches lösbar an dem diese Rastfläche aufweisenden Element des Kupplungsstückes, vorzugsweise am äußeren Element (5a) des Kupplungsstückes vorgesehen ist,

wobei vorzugsweise das wenigstens eine Verriegelungselement (49) einschiebbar an dem die Rastfläche (48) aufweisenden Element (5a) vorgesehen ist, und zwar in einer Achsrichtung einschiebbar, die quer bzw. senkrecht zu derjenigen Achsrichtung verläuft, in der das innere Element (11c) in das äußere Element (5a) einführbar ist,

und/oder wobei vorzugsweise das wenigstens eine Verriegelungselement (49) an einem Teilabschnitt des die Rastfläche (48) aufweisenden Elementes (5a) des Kupplungsstückes (4d) vorgesehen ist, welcher (Teilabschnitt) über die zweite Hydraulikkomponente (1) vorsteht,

und/oder wobei vorzugsweise das Verriegelungselement (49) gabelförmig mit zwei die Rastfläche bildenden Gabelarmen (48) ausgebildet ist.

9. Kupplungsstück nach einem der Ansprüche 4 bis 8, dadurch gekennzeichnet, daß der Ring (53) einen schräg zur Achse des Ringes verlaufenden Schlitz (55) aufweist und/oder daß der Ring (53) an seiner Außenfläche (56) kegelstumpfförmig ausgebildet ist.

10. Demontagewerkzeug zur Verwendung bei einem Kupplungsstück nach einem der Ansprüche 1 bis 17, gekennzeichnet durch seine Ausbildung als Entriegelungshülse (52).

13

EP 0 451 739 A2

FIG.1

## FIG.2

## FIG.3

## FIG.4

EP 0 451 739 A2

## FIG.5

4b

31

32

11b

11b

5

1

## FIG.6

4b

32

11b

5

1

17

FIG.7

EP 0 451 739 A2

FIG.9

FIG.8

FIG.10

FIG.12

FIG.11

EP 0 451 739 A2

FIG.13

## FIG.14